(19) Europäisches Patentamt
European Patent Office
Office européen des brevets

(11) **EP 0 594 013 B1**

(12) **EUROPÄISCHE PATENTSCHRIFT**

(45) Veröffentlichungstag und Bekanntmachung des Hinweises auf die Patenterteilung:
**30.07.1997 Patentblatt 1997/31**

(51) Int Cl.6: **C07F 5/02**

(21) Anmeldenummer: **93116384.4**

(22) Anmeldetag: **09.10.1993**

(54) **Verfahren zur Herstellung von Ph3C[B(C6F5)4]**

Process for the preparation of Ph3C B(C6F5)4

Procédé de préparation de Ph3C B(C6F5)4

(84) Benannte Vertragsstaaten:
**AT BE DE ES FR GB IT NL PT SE**

(30) Priorität: **17.10.1992 DE 4235092**

(43) Veröffentlichungstag der Anmeldung:
**27.04.1994 Patentblatt 1994/17**

(73) Patentinhaber: **Solvay Deutschland GmbH
D-30173 Hannover (DE)**

(72) Erfinder: **Döllein, Günther
D-30627 Hannover (DE)**

(74) Vertreter: **Lauer, Dieter, Dr.
Solvay Pharmaceuticals GmbH,
Hans-Böckler-Allee 20
30173 Hannover (DE)**

(56) Entgegenhaltungen:
• **JOURNAL OF THE AMERICAN CHEMICAL SOCIETY, Band 113, 1991; J.C.W. CHIEN et al., Seiten 8570-8571**

## Beschreibung

Die Erfindung bezieht sich auf ein Verfahren zur Herstellung von $Ph_3C[B(C_6F_5)_4]$.

Das "Kation" der Verbindung $[Et(Ind)_2Zr(CH_3)]^+B(C_6F_5)_4^-$ (Ind=Indenyl) ist ein Katalysator für die isospezifische Polymerisation von Propylen. Die katalytische Verbindung wird nach folgender Reaktionsgleichung hergestellt:

$$Et(Ind)_2Zr(CH_3)_2+Ph_3C[B(C_6F_5)_4]\rightarrow$$

$$[Et(Ind)_2Zr(CH_3)]^+B(C_6F_5)_4^-+Ph_3CCH_3$$

Das als Zwischenprodukt benötigte $Ph_3C[B(C_6F_5)_4]$ und seine Herstellung beschreiben J.C.W. Chien, Woei-Min Tsai und M.D. Rausch in J. Am. Chem. Soc. 113 (1991), Seiten 8570 und 8571. Bei dem dort beschriebenen Verfahren wird $LiB(C_6F_5)_4$ unter Argonatmosphäre mit Triphenylmethylchlorid ($Ph_3CCl$) in 200 ml trockenem n-Hexan vermischt und über Nacht refluxiert. Der gelbe Feststoff wurde in Dichlormethan aufgelöst und Lithiumchlorid durch Filtration entfernt. Das Produkt wurde dann aus Dichlormethan/Hexan rekristallisiert und fiel in Form von orangefarbenen Kristallen an. Die Ausbeute wird mit 64 % angegeben. Aufgabe der vorliegenden Erfindung ist es, ein Verfahren zur Herstellung von Triphenylcarbenium-tetrakis(pentafluorphenyl)borat anzugeben, welches diese Verbindung mit erhöhter Ausbeute liefert. Diese Aufgabe wird durch das erfindungsgemäße Verfahren gelöst. Das erfindungsgemäße Verfahren zur Herstellung von $Ph_3C[B(C_6F_5)_4]$ durch Umsetzung von $LiB(C_6F_5)_4$ mit $Ph_3CCl$, Extraktion des gebildeten Produktes und Abtrennen von unlöslichem LiCl sowie Isolieren des Produktes ist dadurch gekennzeichnet, daß man das $LiB(C_6F_5)_4$ in Form einer Kohlenwasserstoffzubereitung einsetzt mit der Maßgabe, daß das verwendete $LiB(C_6F_5)_4$ vom Zeitpunkt seiner Herstellung bis zu seiner Verwendung nicht isoliert worden ist. Für die Erfindung ist es also wichtig, daß das bei seiner Herstellung in Form einer lösungsmittelhaltigen Reaktionsmischung anfallende $LiB(C_6F_5)_4$ bis zur Verwendung bei der Umsetzung mit $Ph_3CCl$ nicht vollständig vom Lösungsmittel befreit wird. Es ist durchaus möglich, einen Lösungsmittelaustausch durchzuführen oder die bei der Herstellung anfallende Reaktionsmischung zu verdünnen oder einzuengen. Die Kohlenwasserstoffzubereitung enthält vorzugsweise $LiB(C_6F_5)_4$ in einer Konzentration von 20 bis 300 g/l. Besonders bevorzugt ist es, die Herstellung von $LiB(C_6F_5)_4$, vorzugsweise aus Butyllithium und Pentafluorbrombenzol und Bortrichlorid in einem Kohlenwasserstofflösungsmittel, und seine Weiterverarbeitung durch Umsetzung mit $Ph_3CCl$, nach Art einer "Eintopf"-Reaktion durchzuführen. Dabei kann das $BCl_3$ in reiner Form oder als Lösung in einem Kohlenwasserstofflösungsmittel eingesetzt werden.

Bevorzugt ist das Kohlenwasserstofflösungsmittel ein aliphatischer Kohlenwasserstoff mit 5 bis 8 C-Atomen oder ein Gemisch solcher Kohlenwasserstoffe. Da Butyllithium üblicherweise als Lösung in n-Hexan verwendet wird, enthält das Kohlenwasserstofflösungsmittel dann demgemäß n-Hexan als Bestandteil. Besonders bevorzugt ist es, als weiteres Lösungsmittel n-Pentan oder n-Hexan zuzusetzen.

Es wird bevorzugt, die Lithium-Bor-Verbindung und $Ph_3CCl$ im Mol-Verhältnis von 1:(1 ± 0,05) einzusetzen.

Die Umsetzung zwischen der Lithium-Bor-Verbindung und $Ph_3CCl$ kann durch eine Nachreaktionsphase vervollständigt werden. Dabei hält man die Reaktionsmischung vorzugsweise bis 20 Stunden lang, insbesondere 8 bis 20 Stunden lang, bei Umgebungstemperatur oder bei erhöhter Temperatur, z. B. zwischen 30 und 100 °C (bei Verwendung von n-Pentan und n-Hexan beispielsweise bei etwa 50 °C). Der gebildete Feststoff enthält das Produkt sowie LiCl. Bevorzugt dampft man nun die Lösungsmittel ab und fügt ein geeignetes Lösungsmittel für das gewünschte Produkt, vorzugsweise Dichlormethan, zu. Das nichtlösliche LiCl wird abfiltriert und nachgewaschen, bis der Filterrückstand farblos ist. Das Filtrat wird eingeengt und mit wenig Kohlenwasserstofflösungsmittel, vorzugsweise n-Hexan, versetzt. Das Produkt fällt in Form von orangefarbenen Kristallen aus, die abfiltriert und getrocknet werden. Alternativ und bevorzugt dampft man das Lösungsmittel, z. B. das Dichlormethan weitgehend oder vollständig ab, löst den Rückstand in einem aromatischen Lösungsmittel, insbesondere Toluol, und läßt die Lösung in das Kohlenwasserstofflösungsmittel, vorzugsweise n-Hexan einlaufen. Die ausfallenden Kristalle werden dann abfiltriert und getrocknet.

Das erfindungsgemäße Verfahren liefert das gewünschte Produkt in erhöhter Ausbeute und hoher Reinheit. Es kann mit gutem Erfolg für die Herstellung eines Katalysators für die Polymerisation von Ethylen oder Propylen verwendet werden.

Die folgenden Beispiele sollen die Erfindung weiter erläutern, ohne sie in ihrem Umfang einzuschränken.

### Beispiel 1: Herstellung von $Ph_3C[B(C_6F_5)_4]$

In einem 500 ml-Dreihalskolben mit Thermometer, Rührer und Tropftrichter wurden 32,1 g (0,13 Mol) Brompentafluorbenzol in 100 ml n-Pentan vorgelegt. Der Kolbeninhalt wurde auf -78 °C gekühlt. Unter Inertgas wurden 79,3 ml einer Lösung von Lithium-n-Butyl (0,13 Mol; 1,6 M in n-Hexan) derart zugetropft, daß die Temperatur der Reaktionsmischung nicht über -70 °C anstieg. Die weiße Suspension wurde dann 20 Minuten lang bei -78 °C nachgerührt. Anschließend wurden 3,81 g (2,82 ml; 0,0325 Mol) Bortrichlorid mit einer Spritze hinzugegeben. Nach Entfernen der Kühlung wurde 2 Stunden lang bei Raumtemperatur gerührt. In die Reaktionsmischung wurden dann 9,1 g (0,0325 Mol) Tritylchlorid ($Ph_3CCl$)

zugegeben. Dabei färbte sich die Suspension gelb. Die Umsetzung wurde durch eine 16-stündige Nachreaktionsphase bei 50 °C, wobei die Reaktionsmischung siedete, vervollständigt. Die Lösungsmittel Pentan und Hexan wurden abdestilliert, zum gelben Feststoff etwa 300 ml Dichlormethan zugefügt und vom nichtlöslichen Feststoff abfiltriert. Der Filterrückstand (überwiegend LiCl) wurde solange nachgewaschen, bis er farblos war. Das Filtrat wurde eingeengt und mit wenig n-Hexan versetzt. Beim Stehenlassen bildeten sich orangefarbene Kristalle, die abfiltriert und getrocknet wurden.

Ausbeute: 24,4 g (81,3 % d.Th.)
Elementaranalyse:

$B_{ber.}$: 1,17 %
$B_{gef.}$: 1,24 %
$C_{ber.}$: 55,99 %
$C_{gef.}$: 55,70 %

**Beispiel 2: Modifiziertes Verfahren zur Herstellung von $Ph_3C$ $[B(C_6F_5)_4]$**

Beispiel 1 wurde wiederholt. Nach der Zugabe des Tritylchlorids ließ man die Reaktionsmischung zur Vervollständigung der Umsetzung 16 Stunden lang bei Raumtemperatur stehen. Nach dem Extrahieren des gelben Feststoffes mit Dichlormethan und Waschen des Filterrückstandes mit Dichlormethan wurden die Filtrate vereinigt und das Dichlormethan abgedampft. Der verbleibende Rückstand wurde in Toluol gelöst. Beim Zugeben der Lösung in n-Hexan fielen sofort orangefarbene Kristalle aus, die abfiltriert und getrocknet wurden. Die Ausbeute bei diesem energie- und zeitsparenden Verfahren entsprach der in Beispiel 1 erzielten Ausbeute.

**Patentansprüche**

1. Verfahren zur Herstellung von $Ph_3C[B(C_6F_5)_4]$ durch Umsetzung von $LiB(C_6F_5)_4$ mit $Ph_3CCl$, Extraktion des gebildeten Produktes und Abtrennen von unlöslichem LiCl sowie Isolieren des Produktes, dadurch gekennzeichnet, daß man das LiB $(C_6F_5)_4$ in Form einer Kohlenwasserstoffzubereitung einsetzt mit der Maßgabe, daß das verwendete $LiB(C_6F_5)_4$ vom Zeitpunkt seiner Herstellung bis zu seiner Verwendung nicht isoliert worden ist.

2. Verfahren nach Anspruch 1, dadurch gekennzeichnet, daß die Kohlenwasserstoffzubereitung die gegebenenfalls verdünnte oder eingeengte, bei der Herstellung von $LiB(C_6F_5)_4$ anfallende Reaktionsmischung ist.

3. Verfahren nach Anspruch 1 oder 2, dadurch gekennzeichnet, daß die Kohlenwasserstoffzubereitung das $LiB(C_6F_5)_4$ in einer Konzentration von 20 bis 300 g/l enthält.

4. Verfahren nach einem der vorhergehenden Ansprüche, dadurch gekennzeichnet, daß man das Kohlenwasserstofflösungsmittel vor dem Extrahieren des gebildeten Produktes abdampft.

5. Verfahren nach einem der vorhergehenden Ansprüche, dadurch gekennzeichnet, daß das Kohlenwasserstofflösungsmittel ein aliphatischer Kohlenwasserstoff mit 5 bis 8 C-Atomen oder ein Gemisch solcher Kohlenwasserstoffe ist.

6. Verfahren nach einem der vorhergehenden Ansprüche, dadurch gekennzeichnet, daß $LiB(C_6F_5)_4$ und $Ph_3CCl$ im Molverhältnis von $1:(1\pm0,05)$ eingesetzt werden.

7. Verfahren nach einem der vorhergehenden Ansprüche, dadurch gekennzeichnet, daß man das Produkt zur Isolation vom Lösungsmittel befreit, in Toluol löst, die Lösung in ein Kohlenwasserstofflösungsmittel, vorzugsweise n-Hexan, eingibt und die gebildeten Kristalle des Produkts isoliert.

**Claims**

1. A method for the production of $Ph_3C[B(C_6F_5)_4]$ by reacting $LiB(C_6F_5)_4$ with $Ph_3CCl$, extraction of the resulting product and separation of insoluble LiCl and isolation of the product, characterised in that the $LiB(C_6F_5)_4$ is used in the form of a hydrocarbon preparation with the proviso that the $LiB(C_6F_5)_4$ used has not been isolated from the time of its production until its use.

2. A method according to Claim 1, characterised in that the hydrocarbon preparation is the optionally diluted or concentrated reaction mixture produced in the production of $LiB(C_6F_5)_4$.

3. A method according to Claim 1 or 2, characterised in that the hydrocarbon preparation contains the LiB $(C_6F_5)_4$ in a concentration of 20 to 300 g/l.

4. A method according to one of the preceding Claims, characterised in that the hydrocarbon solvent is evaporated off before the extraction of the resulting product.

5. A method according to one of the preceding Claims, characterised in that the hydrocarbon solvent is an aliphatic hydrocarbon with 5 to 8 C atoms or a mixture of such hydrocarbons.

6. A method according to one of the preceding Claims, characterised in that $LiB(C_6F_5)_4$ and $Ph_3CCl$ are

used in a molar ratio of 1:(1 ± 0.05).

7. A method according to one of the preceding Claims, characterised in that for isolation the product is freed of solvent, dissolved in toluene, the solution is introduced into a hydrocarbon solvent, preferably n-hexane, and the resulting crystals of the product are isolated.

**Revendications**

1. Procédé de préparation de $Ph_3C[B(C_6F_5)_4]$ par réaction de $LiB(C_6F_5)_4$ avec $Ph_3CCl$, extraction du produit formé et séparation de LiCl insoluble ainsi qu'isolement du produit, procédé caractérisé. en ce qu'on utilise le $LiB(C_6F_5)_4$ sous forme d'une préparation hydrocarbonée, en prenant des dispositions pour ne pas isoler, depuis l'instant de sa préparation jusqu'à son utilisation, le $LiB(C_6F_5)_4$ que l'on utilise.

2. Procédé selon la revendication 1, caractérisé en ce que la préparation hydrocarbonée est le mélange réactionnel éventuellement dilué ou concentré, obtenu lors de la préparation de $LiB(C_6F_5)_4$.

3. Procédé selon la revendication 1 ou 2, caractérisé en ce que la préparation hydrocarbonée contient le $LiB(C_6F_5)_4$ en une concentration de 20 à 300 g/l.

4. Procédé selon une des revendications précédentes, caractérisé en ce qu'on chasse par évaporation le solvant hydrocarboné, avant de réaliser l'extraction du produit formé.

5. Procédé selon une des revendications précédentes, caractérisé en ce que le solvant hydrocarboné est un hydrocarbure aliphatique comportant 5 à 8 atomes de carbone ou est un mélange de tels hydrocarbures.

6. Procédé selon une des revendications précédentes, caractérisé en ce qu'on utilise $LiB(C_6F_5)_4$ et $Ph_3CCl$ selon un rapport molaire de 1:1 (± 0,05).

7. Procédé selon une des revendication précédentes, caractérisé en ce qu'on enlève le solvant du produit destiné à être isolé, on dissout ce produit dans du toluène, on introduit la solution dans un solvant hydrocarboné, avantageusement du n-hexane, et l'on isole les cristaux du produit ainsi formé.